# EUROPEAN PATENT APPLICATION

(11) **EP 4 372 880 A1**
(43) Date of publication of application: **22.05.2024**
(21) Application number: 23165900.4
(22) Date of filing: 31.03.2023
(51) Int. Cl.: H01M 50/211, H01M 50/244, H01M 50/264, H01M 50/289

(54) **BATTERY MODULE AND BATTERY PACK INCLUDING SAME**

(30) Priority: 18.11.2022 KR 20220155530
(71) Applicant: SK On Co., Ltd., Seoul 03161 (KR)
(72) Inventor: LEE, Gang U, 34124 Daejeon (KR)
(74) Representative: Bird & Bird LLP

(57) **Abstract**

Provided is a battery module, the battery module including: a plurality of battery cells stacked in a first direction; a support member disposed between the plurality of battery cells; a module housing in which the plurality of battery cells are accommodated; and a plurality of end covers coupled to the module housing, and facing the plurality of battery cells in a second direction, perpendicular to the first direction, wherein the support member protrudes further in the second direction from the plurality of end covers.

## Description

### BACKGROUND

The present disclosure relates to a battery module and a battery pack including the same.

Secondary batteries (battery cells) have the convenience of being capable of being charged and discharged, unlike primary batteries, and have attracted much attention as a power source for various mobile devices and electric vehicles.

Such a battery module is modularized by electrically connecting a plurality of battery cells due to the need for high output and high capacitance, and a battery pack including a plurality of such battery modules can be applied to a device requiring high power, such as an electric vehicle.

Such a high-capacitance battery pack may include a plurality of frame structures inside a case (or housing) for structural rigidity thereof.

In assembling the battery module inside the battery pack, dead space may be formed between the battery module and the above-described frame structure due to manufacturing tolerances. As an output value required for the battery pack increases, more battery modules are disposed, and thus the dead space gradually increases, resulting in a problem in which energy density of the battery pack is lowered.

In addition, in the conventional battery pack, it is difficult to dispose a high-capacitance and large-sized battery module due to spatial restrictions according to the disposition of the frame structure.

### SUMMARY

The present disclosure has been devised to solve at least some of the problems of the prior art as described above, and aspect of the present disclosure is to provide a battery pack capable of maintaining structural rigidity while having high energy density.

In addition, an aspect of the present disclosure is to provide a battery module and battery pack having high structural stability by disposing a support member between a plurality of battery cells.

In addition, an aspect of the present disclosure is to provide a structure capable of disposing a large battery module within a limited space inside a battery pack.

In order to achieve the above object, according to aspects of the present disclosure, provided is a battery module, the battery module including: a plurality of battery cells stacked in a first direction; a support member disposed between the plurality of battery cells; a module housing in which the plurality of battery cells are accommodated; and a plurality of end covers coupled to the module housing, and facing the plurality of battery cells in a second direction, perpendicular to the first direction, wherein at least a portion of the support member protrudes further in the second direction than the plurality of end covers.

In embodiments, the support member may include a body portion facing at least one of a plurality of battery cells in a first direction; and an extension portion extending from the body portion in a second direction, and passing between a plurality of end covers.

In embodiments, the extension portion may be disposed at both ends of the support member in a second direction, respectively.

In embodiments, the extension portion and the plurality of end covers may be alternately disposed in the first direction.

In embodiments, the plurality of end covers may be coupled to a module housing and an extension portion.

In embodiments, the support member may be provided in plural and disposed to be spaced apart from others thereof in the first direction.

According to aspects of the present disclosure, provided is a battery pack, the battery pack including: a plurality of battery modules; and a pack housing in which the plurality of battery modules are accommodated, wherein at least one of the plurality of battery modules includes: a plurality of battery cells stacked in a first direction; a support member disposed between the plurality of battery cells; and a plurality of end covers facing the plurality of battery cells in a second direction, perpendicular to the first direction, wherein at least a portion of the support member protrudes further in the second direction than the plurality of end covers and is coupled to the pack housing.

In embodiments, the support member may include a body portion facing at least one of the plurality of battery cells in a first direction; and an extension portion extending from the body portion in a second direction and passing between the plurality of end covers.

In embodiments, the pack housing may include a lower frame facing lower surfaces of a plurality of battery modules; and a plurality of side frames connected to the lower frame, and facing the plurality of battery modules in a second direction, wherein the extension portion may be coupled to the plurality of side frames.

In embodiments, the extension portion may be coupled to a plurality of side frames.

In embodiments, a length of the support member in the second direction may be equal to or greater than a distance between the plurality of side frames.

In embodiments, the support member may further include an insertion protrusion disposed on the extension portion, and the plurality of side frames may include an insertion groove into which the insertion protrusion may be inserted.

In embodiments, the battery pack may further include a fastening member penetrating through the insertion protrusions and fastened to the insertion grooves.

In embodiments, the extension portion may be disposed at both ends of the support member in the second direction, respectively.

In embodiments, the extension portion and the plurality of end covers may be alternately disposed in the first direction.

In embodiments, the plurality of end covers may be welded to the extension portion.

In embodiments, the insertion protrusion may be seated and coupled on an upper surface of the side frame.

In embodiments, the extension portion may be welded to at least one of the plurality of side frames.

In embodiments, one of the plurality of end covers may be coupled to one surface of the support member, and the other may be coupled to an other surface opposite to the one surface of the support member.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view of a battery module;
FIG. 2 is an exploded perspective view of a battery module;
FIG. 3 is a perspective view of a battery cell;
FIG. 4 illustrates a state in which an end cover is coupled to a module housing and a support member;
FIG. 5 is a top view of a battery module;
FIG. 6 illustrates a state in which battery modules are disposed in a pack housing of a battery pack;
FIG. 7 is an exemplary view for illustrating a state in which a support member of the battery module and a pack housing are coupled;
FIG. 8 is an exemplary view for illustrating a state in which a support member of the battery module and a pack housing are coupled; and
FIG. 9 is an exploded perspective view of a battery module according to another embodiment.

### DETAILED DESCRIPTION

Prior to the detailed description of the present invention, the terms or words used in this specification and claims described below should not be construed as being limited to a common or dictionary meaning, and the inventors should use their own invention in the best way. It should be interpreted as a meaning and concept corresponding to the technical idea of the present disclosure based on the principle that it may be properly defined as a concept of a term for explanation. Therefore, the embodiments described in this specification and the configurations shown in the drawings are only the most preferred embodiments of the present disclosure, and do not represent all of the technical ideas of the present disclosure, so it should be understood that there may be various equivalents and modifications that can be substituted for them at the time of this application.

In the drawings, same elements will be indicated by same reference numerals. Also, redundant descriptions and detailed descriptions of known functions and elements which may unnecessarily make the gist of the present disclosure obscure will not be provided. In the accompanying drawings, a portion of elements may be exaggerated, omitted or briefly illustrated, and the sizes of the elements do not necessarily reflect the actual sizes of these elements.

In the following description, singular expressions include plural expressions unless the context clearly stated otherwise. The terms "comprise" or "comprise" are intended to indicate that there is a feature, number, step, operation, component, part, or combination thereof described in the specification, but one or more other features or numbers, so it should be understood that the presence or addition of one or more other features, numbers, steps, operations, components, parts, or combinations thereof is not precluded.

In example embodiments, terms such as an upper side, an upper portion, a lower side, a lower portion, a side surface, a front surface, a rear surface, or the like, are represented based on the directions in the drawings, and may be used differently if the direction of an element is changed.

The terms "first," "second," and the like may be used to distinguish one element from the other, and may not limit a sequence and/or an importance, or others, in relation to the elements. In a portion of cases, a first element may be referred to as a second element, and similarly, a second element may be referred to as a first element without departing from the scope of right in the example embodiments.

Hereinafter, embodiments of the present disclosure will be described with reference to the accompanying drawings. However, the spirit of the present disclosure is not limited to the presented examples. For example, those skilled in the art and understanding the spirit of the present inventive concept could readily suggest other embodiments included in the scope of the present inventive concept through additions, alterations, deletions, or the like, of elements, but these will be also included within the scope of the present disclosure. The shapes and sizes of elements in the drawings may be exaggerated for clarity.

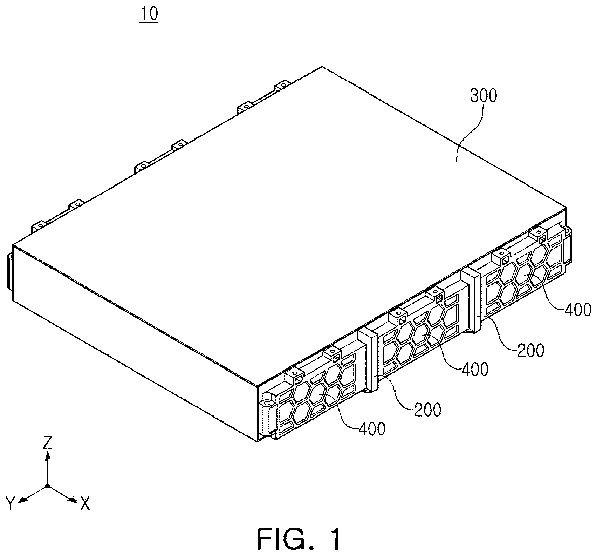

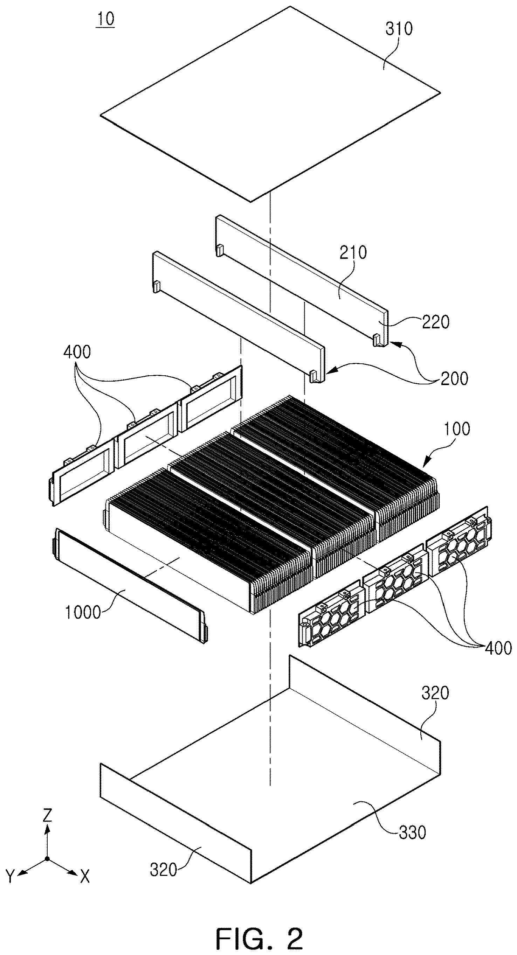

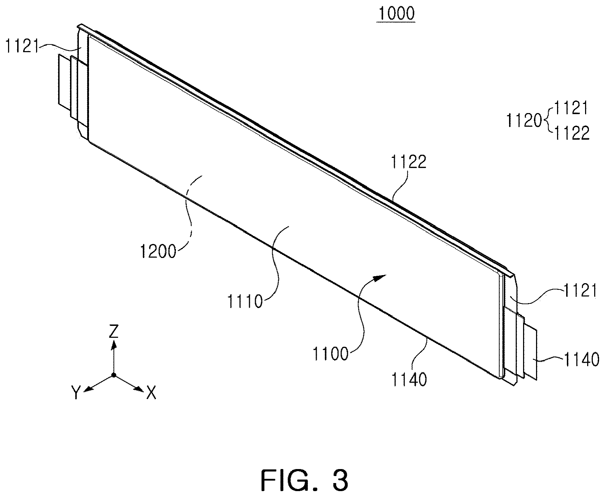

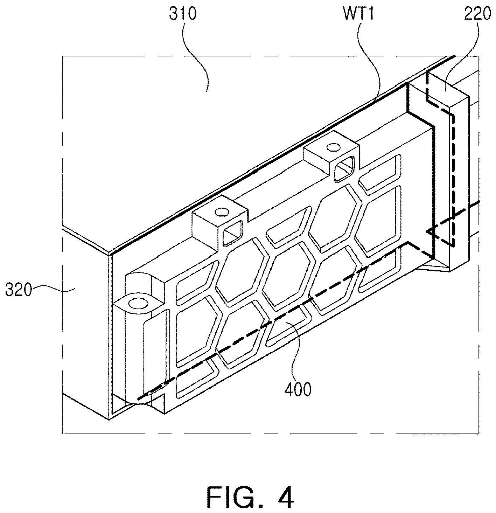

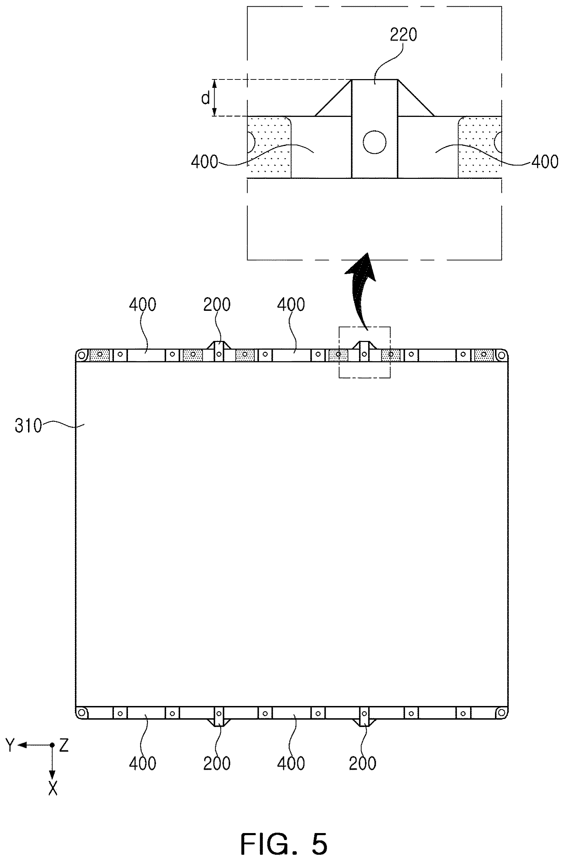

FIG. 1 is a perspective view of a battery module 10. FIG. 2 is an exploded perspective view of the battery module 10. FIG. 3 is a perspective view of a battery cell 1000 included in the battery module 10. FIG. 4 illustrates a state in which an end cover 400 is coupled to a module housing 300 and a support member 200. FIG. 5 is a top view of the battery module 10.

The battery module 10 may include a plurality of cell assemblies 100, a support member 200 disposed between the cell assemblies 100, and a module housing 300 providing an internal space in which the cell assemblies 100 are accommodated.

The module housing 300 may include a lower cover 330, an upper cover 310, and a side cover 320, supporting the plurality of cell assemblies 100. An internal space in which the plurality of cell assemblies 100 may be accommodated may be formed between the upper cover 310 and the lower cover 330.

Referring to FIG. 2, a lower cover 330 and a side cover 320 integrally formed may be disposed to cover lower surfaces and side surfaces of the plurality of cell assemblies 100, and the upper cover 310, integrally formed may be disposed to cover upper surfaces of the plurality of cell assemblies 100.

However, specific shapes of the upper cover 310 and the lower cover 330 are not limited to those shown in FIG. 2. For example, the upper cover 310 or the lower cover 330 of the module housing 300 may be provided in plural, and in this case, each of the upper cover 310 or the lower cover 330 may also be disposed to cover the different cell assemblies 100.

A plurality of cell assemblies 100 may be disposed inside the module housing 300.

Each of the cell assemblies 100 may include a plurality of battery cells 1000, and may be configured to store or discharge electrical energy.

The cell assembly 100 may include a plurality of battery cells 1000 stacked in one direction, a bus bar (not shown) electrically connecting the plurality of battery cells 1000, and a cell protection member (not shown) disposed between the plurality of battery cells 1000 to protect the battery cells 1000.

The battery cells 1000 of the cell assembly 100 may be disposed to be stacked in one direction (e.g., Y-axis direction), and may be electrically connected to each other to store or output electrical energy. In the following description, a stacking direction of the battery cells 1000 included in the cell assembly 100 is referred to as a 'first direction' or a 'cell stacking direction.'

The cell assembly 100 may include a plurality of bus bars (not shown) electrically connecting the battery cells 1000 to each other.

The cell assembly 100 may further include a cell protection member (not shown) for protecting the battery cells 1000. The cell protection member (not shown) may be disposed between the plurality of battery cells 1000. For example, the cell protection member (not shown) may be a heat insulating member (not shown) or a compressive member (not shown).

The heat insulation member (not shown) may block propagation of flame or high-temperature thermal energy between neighboring battery cells 1000, thereby preventing a chain ignition phenomenon from occurring inside the cell assembly 100. For example, the heat insulation member (not shown) may include a material at least partially comprising mica, silica, silicate, graphite, alumina, ceramic wool, aerogel, which can perform a heat and/or flame propagation prevention function.

The compressive member (not shown) may be compressed and elastically deformed when a specific battery cell 1000 expands compressive member, and accordingly, expansion of an entire volume of the cell assembly 100 may be suppressed. For example, the compressive member (not shown) may be made of polyurethane foam, and may have a size corresponding to a wide surface of the battery cell 1000.

In one battery module 10, a plurality of cell assemblies 100 may be electrically connected to each other to output a design power value required for the battery module 10. For example, two cell assemblies 100 facing each other with the support member 200 interposed therebetween may be connected in series or in parallel.

Alternatively, in one battery module 10, the plurality of cell assemblies 100 may be configured to be electrically isolated from each other. For example, the two cell assemblies 100 facing each other with the support member 200 interposed therebetween may be electrically isolated from each other, and each of the cell assemblies 100 may also be configured to be electrically connected to another neighboring battery module 10.

A heat-dissipation member (not shown) may be disposed between the lower cover 330 and the plurality of cell assemblies 100. The heat-dissipation member (not shown) may be disposed so that one surface thereof is in contact with the cell assembly 100, and the other thereof, opposite to the one surface is in contact with the lower cover 330. The heat-dissipation member (not shown) may be provided with a thermal adhesive. The heat-dissipation member (not shown) may fill a space between the cell assembly 100 and the lower cover 330 so that heat transfer by conduction is more actively performed. Accordingly, heat-dissipation efficiency of the battery module 10 may be increased.

The battery cell 1000 included in the cell assembly 100 may be a secondary battery. As an example, the battery cell 1000 may be formed of a lithium secondary battery, but an embodiment thereof is not limited thereto.

Referring to FIG. 3, the battery cell 1000 may be a pouch-type secondary battery having a structure in which an electrode assembly 1200 is accommodated in a pouch 1100.

In the pouch 1100 type secondary battery, the electrode assembly 1200 and an electrolyte solution (not shown) may be accommodated in the pouch 1100 formed by forming one sheet or a plurality of exterior materials. For example, after forming one or two accommodating portions by forming by forming one sheet or a plurality of exterior materials, by folding the exterior materials so that the accommodating portions form a single space, the pouch 1100 may be formed.

The pouch 1100 may include a cell body portion 1100 in which the electrode assembly 1200 and the electrolyte solution (not shown) are accommodated, a sealing portion 1120 formed around the cell body portion 1100, and an electrode lead 1140 electrically connected to the electrode assembly 1200 and exposed externally of the pouch 1100.

The cell body portion 1110 provides an internal space in which the electrode assembly 1200 and an electrolyte solution (not shown) are accommodated. The electrode assembly 1200 may have a form in which a plurality of positive electrode plates and a plurality of negative electrode plates are stacked with a separator interposed therebetween.

A sealing portion 1120 formed by bonding the pouch 1100 may be disposed on at least a portion of a peripheral portion of the cell body portion 1110. A thermal fusion method may be used to bond the pouch 1100, but an embodiment thereof is not limited thereto.

The sealing portion 1120 may include a first sealing portion 1121 formed in a portion in which the electrode lead 1140 is disposed and a second sealing portion 1122 formed in a portion in which the electrode lead 1140 is not disposed.

In order to increase reliability of bonding of the sealing portion 1120 and to minimize an area of the sealing portion 1120, the sealing portion 1120 may be formed in a form, folded at least once. For example, the second sealing portion 1122 in which the electrode lead 1140 is not disposed may have a form folded at least once.

In the battery cell 1000, when one sheet of the exterior material is folded to have a structure surrounding the electrode assembly 1200, there is no need to form a sealing portion in a portion in which the exterior material is folded. In this case, as illustrated in FIG. 3, the sealing portion 1120 may be formed only on three surfaces of outer surfaces of the cell body portion 1100, and a folding portion 1140 may be formed on one of outer surfaces of the cell body portion 1110.

However, a structure of the battery cell 1000 is not limited to the above. For example, it is possible to form a cell body portion 1110 by overlapping two sheets of exterior materials, and to form a sealing portion on all four surfaces of the peripheral portion of the cell body portion 1110.

Continuously referring to FIGS. 2, 4, and 5, the battery module 10 may include an end cover 400 covering one side of the cell assembly 100. The end cover 400 may include a material having rigidity (e.g., a metal material such as aluminum, or the like), to protect the cell assembly 100 from external impacts.

For example, the module housing 300 may have an open shape in a direction (e.g., X-axis direction) perpendicular to a first direction (Y-axis direction), and an end cover 400 may be disposed in the open region of the module housing 300 in the first direction (Y-axis direction).

The end cover 400 may be disposed to face the cell assembly 100 in a second direction (X-axis direction). In this case, the second direction (X-axis direction) may be a direction perpendicular to the first direction (Y-axis direction).

A plurality of end covers 400 may be disposed side by side to form one side of the battery module 10. For example, as illustrated in FIG. 2, the plurality of end covers 400 may be disposed side by side along the first direction (Y-axis direction), to form one side of the battery module 10. Here, a portion of the support member 200 may be positioned between the end covers 400 disposed in the first direction (Y-axis direction).

Each of the end covers 400 may be disposed to match the cell assembly 100. For example, both ends of one cell assembly 100 may be covered by a pair of end covers 400, disposed to be spaced apart in the second direction (X-axis direction).

The end cover 400 may be bonded to the module housing 300. For example, referring to FIG. 4, an upper side of the end cover 400 may contact the upper cover 310 and weldingly coupled, and a lower side of the end cover 400 may contact the lower cover 330 and weldingly coupled. In addition, one side of the end cover 400 disposed at an edge of the battery module 10 in the first direction (Y-axis direction) may be in contact with a side cover 320 and may be weldingly coupled. In addition, the other side of the end cover 400 may contact the support member 200 and may be welded.

A first welding line WT1 may be formed along a boundary line in which the end cover 400 is in contact with other members (e.g., the module housing 300 or the support member 200). Welding may proceed along the first welding line in a state in which the end cover 400 is arranged in place, and thus the end cover 400 may be firmly fixed.

However, a fixing method of the end cover 400 is not limited to the above-described welding method. For example, the end cover 400 may be mechanically fastened (e.g., bolt coupled) to the module housing 300 by a separate fastening member (e.g., a bolt). Alternatively, a bonding material (e.g., a bond or a binder) may be applied between the end cover 400 and the module housing 300 to fix the end cover 400 and the module housing 300 to each other.

Meanwhile, when the end cover 400 includes a metallic material, an insulating member (not shown) for preventing an electrical short between the end cover 400 and the cell assembly 100 may be additionally disposed inside the end cover 400.

A specific structure of the end cover 400 is not limited to the above. For example, the end cover 400 may be integrally formed to form one side of the battery module 10. In this case, in order to expose the support member 200 externally of the battery module 10, the integrated end cover 400 may include a groove through which the support member 200 passes.

The battery module 10 may include one or more support members 200 disposed between the cell assemblies 100.

The support member 200 may be disposed to cross an internal space of the module housing 300, and may partition the internal space of the module housing 300. A plurality of support members 200 may be provided. The plurality of support members 200 may be disposed to be spaced apart from others thereof in the first direction (Y-axis direction) inside the module housing 300.

The support member 200 may include a material having rigidity (e.g., a metal material such as aluminum, or the like), to structurally support the battery module 10.

In addition, at least a portion of the support member 200 may be exposed externally of the battery module 10, and serve as a structure used to fix the battery module 10 to another member (e.g., a pack housing of a battery pack).

At least a portion of the support member 200 may be disposed to face the cell assembly 100 in a first direction (Y-axis direction). The support member 200 may include a body portion 210 facing the cell assembly 100 in a first direction (Y-axis direction), and an extension portion 220 extending in a second direction (X-axis direction), perpendicular to the first direction (Y-axis direction). The extension portion 220 may be disposed at both ends of the body part 210 in the second direction (X-axis direction) to form both ends of the support member 200 in the second direction (X-axis direction).

A length of the support member 200 in the second direction (X-axis direction) may be longer than a length of any one battery cell 1000 in the second direction (X-axis direction). When the support member 200 is disposed between the cell assemblies 100, both ends of the support member 200 may protrude further in the second direction (X-axis direction) from the cell assembly 100.

At least a portion of the support member 200 may be exposed externally of the battery module 10. For example, referring to FIG. 5, the extension portion 220 of the support member 200 may be disposed between any two end covers 400 so as to protrude further by a predetermined length (d) in the second direction (X-axis direction) from the end cover 400, and accordingly, the extension portion 220 of the support member 200 may be exposed externally of the battery module 10.

In the support member 200, the body portion 210 may face the battery cell 1000 of the cell assembly 100 in the first direction (Y-axis direction), and the extension portion 220 may face the end cover 400 in the first direction (Y-axis direction).

Here, the extension portion 220 and the end cover 400 may be coupled to each other. For example, the extension portion and the end cover 400 may be disposed so that at least portions thereof are in contact with each other, and may be weldingly coupled to each other. Alternatively, the extension portion 220 and the end cover 400 may be mechanically fastened (e.g., bolt coupled) to each other through a separate fastening member (e.g., a bolt). Alternatively, a bonding material (e.g., a bond or a binder) may be applied between the extension portion 220 and the end cover 400 to fix the extension portion 220 and the end cover 400 to each other.

Accordingly, a portion of the end cover 400 may be coupled to the module housing 300, and the other portion of the end cover 400 may be bonded to the support member 200. However, a method in which the end cover and the module housing 300 are bonded and a method in which the end cover 400 and the support member 200 are coupled are the above-described methods (e.g., coupled by welding, coupled by a fastening member, and the like), and the bonding and coupling may be performed in any manner as long as both members can be firmly fixed to each other.

The support member 200 may be alternately disposed with the cell assembly 100. For example, referring to FIG. 2, the plurality of cell assemblies 100 and the support member 200 may be alternately disposed in the first direction

(Y-axis direction). In this case, a plurality of support members 200 may be provided corresponding to the number of cell assemblies 100. For example, the battery module 10 may include N cell assemblies 100 and N-1 support members 200 (where N refers to a natural number equal to or greater than 2) .

According to embodiments, a battery module 10 having high energy capacitance may be manufactured by assembling a plurality of cell assemblies 100. In addition, the battery module 10 having high structural rigidity may be implemented by disposing the support member 200 between the cell assemblies 100. Accordingly, manufacturers can quickly and easily manufacture battery modules 10 of various sizes and types.

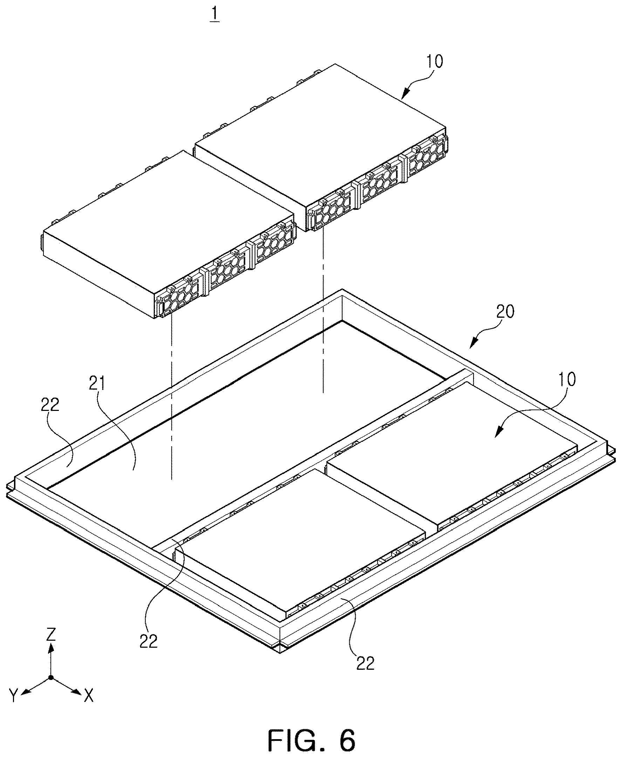

Hereinafter, a battery pack 1 including a plurality of battery modules 10 according to embodiments will be described with reference to FIGS. 6 to 8.

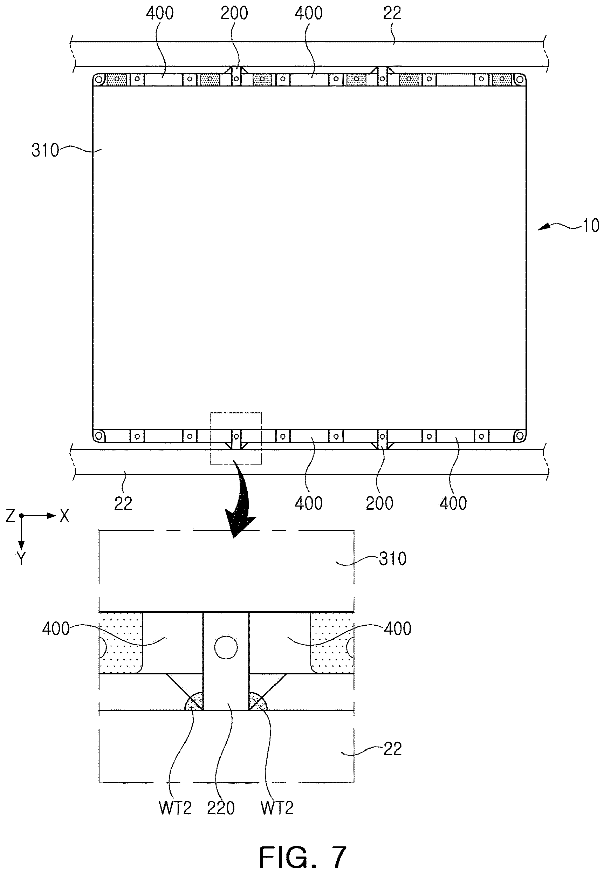

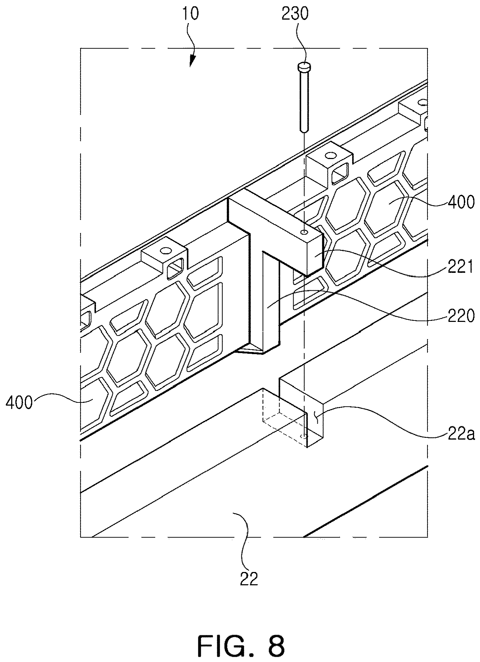

FIG. 6 illustrates a state in which a battery module 10 is disposed in a pack housing 20 of the battery pack 1. FIG. 7 is an exemplary diagram for illustrating a state in which a support member 200 of the battery module 10 and a pack housing 20 are coupled. FIG. 8 is an exemplary view for illustrating a state in which a support member 200 of the battery module 10 and a pack housing 20 are coupled. Since the battery module 10 described in FIGS. 6 to 8 corresponds to the battery module 10 described in FIGS. 1 to 5, overlapping descriptions thereof may be omitted.

The battery pack 1 may include a plurality of battery modules 10 and a pack housing 20 accommodating the same. The plurality of battery modules 10 may be accommodated inside the pack housing 20 and electrically connected to each other.

The pack housing 20 may include a lower frame 21 on which a plurality of battery modules 10 are seated, and a side frame 22 facing a side surface of the battery module 10. Although not shown in FIGS. 6 to 8, the pack housing 20 may further include an upper frame (not shown) covering an upper surface of the battery module 10.

The lower frame 21 and the side frame 22 may be connected to each other. The upper frame (not shown) may be connected to a side frame 22 to cover an internal space of the pack housing 20.

A plurality of side frames 22 may be disposed on an upper surface of the lower frame 21. For example, referring to FIG. 6, the plurality of side frames 22 may be disposed to be spaced apart in a second direction (X-axis direction) on the lower frame 21. One of the plurality of side frames 22 may be disposed on an edge of the lower frame 21 to form a side surface of the pack housing 20, and the other one thereof may be disposed to partition the internal space of the pack housing 20.

The battery module 10 may be disposed between two side frames 22, adjacent to each other. The side frame 22 may face at least one of the plurality of battery modules 10 in a second direction (X-axis direction). For example, as illustrated in FIG. 6, a plurality of battery modules 10 may be disposed in each space, partitioned by the side frame 22. In this case, the battery module 10 may be disposed such that the end cover 400 faces the side frame 22 in a second direction (X-axis direction).

The battery module 10 may be coupled to the side frame 22 and fixed to an inside of the pack housing 20. For example, a support member 200 protruding in the second direction (X-axis direction) from the side surface of the battery module 10 may be bonded (e.g., mechanically fastened or weldingly coupled) to the pack housing 20, and accordingly, the battery module 10 may be fixed to the pack housing 20.

Referring to FIG. 7, as a support member 200 of the battery module 10 is weldingly coupled to the pack housing 20, the battery module 10 may be fixed inside the pack housing 20.

A length of the support member 200 in the second direction (X-axis direction) may be approximately the same as a distance between two neighboring side frames 22 in the second direction (X-axis direction). Therefore, when the battery module 10 is disposed between the side frames 22, both end portions of the support member 200, that is, the extension portion 220 of the support member 200 may be in contact with the side frame 22.

The support member 200 and the side frame 22 may be weldingly coupled. Referring to FIG. 7, a welding point WT2 may be set along a portion in which the extension portion 220 of the support member 200 and the side frame 22 are in contact with each other. The welding point WT2 may be set to extend in a third direction (Z-axis direction), which is a height direction of the pack housing 20. Here, the third direction (Z-axis direction) may be a direction perpendicular to both the first direction (Y-axis direction) and the second direction (X-axis direction) described above.

However, a method in which the extension portion 220 and the side frame 22 are coupled to each other is not limited to the above-described welding method. For example, the extension portion 220 and the side frame 22 may be bonded to each other through a separate fastening member or a bonding material such as a bond, or the like.

Since the support member 200 protrudes further in the second direction (X-axis direction) from an end cover 400 of the battery module 10, a predetermined gap may be formed between the end cover 400 and the side frame 22. A welding process can be safely and easily performed using this predetermined gap.

A coupling structure between the battery module 10 and the pack housing 20 is not limited to the above. For example, as illustrated in FIG. 8, the battery pack 1 may further include a separate fastening member 230 coupling the battery module 10 and the pack housing 20 together.

For example, referring to FIG. 8, the extension portion 220 of the support member 200 may include an insertion protrusion 221 protruding in a second direction (X-axis direction). The side frame 22 of the pack housing 20 may include an insertion groove 22a into which the insertion protrusion 221 is inserted. The insertion protrusion 221 may be configured to be inserted into the insertion groove 22a in the third direction (Z-axis direction). Accordingly, while the battery module 10 is accommodated in the pack housing 20, the insertion protrusion 221 may be naturally inserted into the insertion groove 22a.

The fastening member 230 may penetrate through the insertion protrusion 221 and be fastened to the insertion groove 22a. Accordingly, the support member 200 may be firmly fixed to the side frame 22.

The fastening member 230 may penetrate through the insertion protrusion 221 and be fastened to the insertion groove 22a. Accordingly, the support member 200 may be firmly fixed to the side frame 22.

Specific shapes of the insertion protrusion 221 and the insertion groove 22a are not limited to those illustrated in FIG. 8. For example, the insertion protrusion 221 may be configured to protrude from the extension portion 220 in a direction other than the second direction (X-axis direction). Alternatively, in order to increase a fastening area between the support member 200 and the side frame 22, a length of the insertion protrusion 221 in the first direction (Y-axis direction) may be greater than the length of the extension portion 220 in the first direction (Y-axis direction).

A size of the insertion groove 22a may be configured to match a size of the insertion protrusion 221. Accordingly, while the insertion protrusion 221 is inserted into the insertion groove 22a, the battery module 10 may be naturally aligned in place. However, the size of the insertion groove 22a is not limited to the above, and may be formed to be greater than the size of the insertion protrusion 221, for example.

According to embodiments, since the support member 200 of the battery module 10 is directly coupled to the side frame 22 of the pack housing 20, the pack housing 20 may have a structure in which a separate rigid member crossing the side frame 22 is omitted.

In the case of a conventional battery pack, a plurality of cross frames vertically and horizontally crossing an upper surface of a lower frame of the pack housing were disposed for structural rigidity, but when using the battery module 10 according to embodiments, such a cross frame may be omitted, or the number thereof may be significantly reduced. As the cross frame is omitted, a dead space generated between the cross frame and the battery module 10 due to assembly tolerances may be significantly reduced.

That is, according to embodiments, a structure capable of performing a role of the above-described cross frame (i.e., the support member 200) may be disposed inside the battery module 10 and configured to be stacked and assembled with the cell assembly 100, so that it is possible to fundamentally prevent the above-described dead space from occurring. Accordingly, a plurality of battery modules 10 may be collectively disposed within a limited space of the pack housing 20, and a battery pack 1 having high energy density may be implemented.

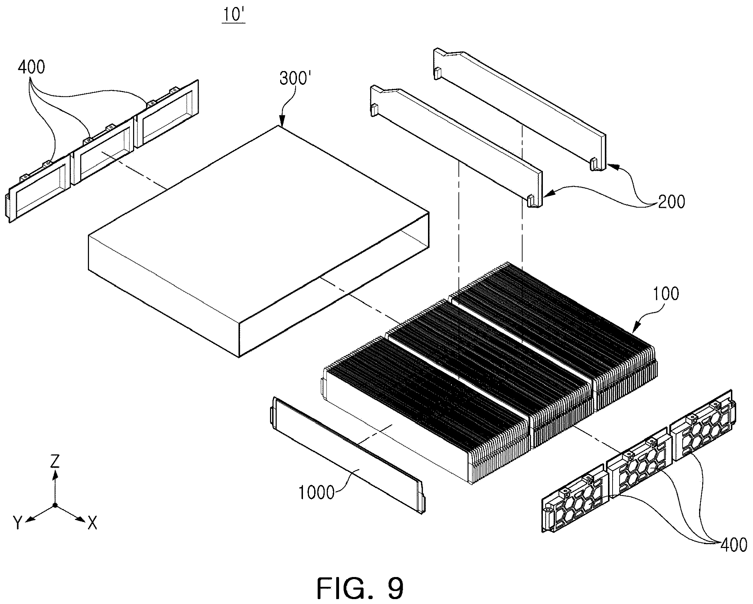

FIG. 9 is an exploded perspective view of a battery module 10' according to another embodiment.

Unlike the module housing 300 illustrated in FIG. 2, a module housing 300' of the battery module 10' may be integrally formed. For example, as illustrated in FIG. 9, the module housing 300' may be manufactured in a monoframe type in which an upper cover, a lower cover, and a side cover are integrally formed.

The module housing 300' may be provided as a box-shaped member open in a second direction (X-axis direction). The cell assembly 100 and the support member 200 may be inserted into the module housing 300' in a second direction (X-axis direction), and the plurality of end covers 400 may be inserted into the module housing 300' and the support member 200 to close an internal space of the module housing 300' .

In the battery module 10' illustrated in FIG. 9, technical features other than the shape of the housing are the same as those of the battery module 10 described above with reference to FIGS. 1 to 8. For example, since the cell assembly 100, the support member 200, and the end cover 400 of FIG. 9 correspond to the cell assembly 100, the support member 200, and the end cover 400 of FIGS. 1 to 8, a detailed description thereof may refer to the description of FIGS. 1 to 8.

As set forth above, according to embodiments, a battery pack capable of maintaining structural rigidity while having high energy density may be implemented.

According to embodiments, a battery module and a battery pack having high structural stability may be provided by disposing a support member between a plurality of battery cells.

According to embodiments, a large battery module may be disposed within a limited space inside the battery pack.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Therefore, the scope of the disclosure is defined not by the detailed description, but by the claims and their equivalents, and all variations within the scope of the claims and their equivalents are to be construed as being included in the disclosure.

For example, it may be implemented by deleting some components from the above-described embodiments, and each embodiment may be implemented in combination with each other.

## Claims

1. A battery module, comprising:
a plurality of battery cells stacked in a first direction;
a support member disposed between the plurality of battery cells;
a module housing in which the plurality of battery cells are accommodated; and
a plurality of end covers coupled to the module housing, and facing the plurality of battery cells in a second direction, perpendicular to the first direction,
wherein at least a portion of the support member protrudes further in the second direction than the plurality of end covers.

2. The battery module of claim 1, wherein the support member comprises
a body portion facing at least one of the plurality of battery cells in the first direction; and
an extension portion extending from the body portion in the second direction, and passing between the plurality of end covers.

3. The battery module of claim 2, wherein the extension portion is disposed at both ends of the support member in the second direction, respectively.

4. The battery module of any one of claims 2 or 3, wherein the extension portion and the plurality of end covers are alternately disposed in the first direction.

5. The battery module of any one of claims 2 to 4, wherein the plurality of end covers are coupled to the module housing and the extension portion.

6. The battery module of any one of claims 1 to 5, wherein the support member is provided in plural, and disposed to be spaced apart from others thereof in the first direction.

7. A battery pack, comprising:
at least one battery module according to any one of claims 1 to 6; and
a pack housing in which the battery module is accommodated,
wherein at least a portion of the support member of the battery module is coupled to the pack housing.

8. The battery pack of claim 7, wherein the pack housing comprises
a lower frame facing lower surfaces of the battery module; and
a plurality of side frames connected to the lower frame, and facing the battery module in the second direction,
wherein the extension portion is coupled to the plurality of side frames.

9. The battery pack of claim 8, wherein the extension portion is coupled to the plurality of side frames.

10. The battery pack of any one of claims 8 or 9, wherein a length of the support member in the second direction is equal to or greater than a distance between the plurality of side frames.

11. The battery pack of any one of claims 8 to 10, wherein the support member further comprises an insertion protrusion disposed on the extension portion,
wherein the plurality of side frames comprise an insertion groove into which the insertion protrusion may be inserted.

12. The battery pack of claim 11, further comprising:
a fastening member penetrating through the insertion protrusion and fastened to the insertion groove.

13. The battery pack of any one of claims 11 or 12, wherein the insertion protrusion is seated and coupled on an upper surface of the side frame.

14. The battery pack of any one of claims 9 to 13, wherein the extension portion is welded to at least one of the plurality of side frames.

15. The battery pack of any one of claims 7 to 14, wherein one of the plurality of end covers is coupled to one surface of the support member, and the other is coupled to an other surface opposite to the one surface of the support member.
